(19)

Europäisches Patentamt

European Patent Office

Office européen des brevets

(11) **EP 4 318 395 A1**

(12) **EUROPEAN PATENT APPLICATION**

(43) Date of publication:
**07.02.2024  Bulletin 2024/06**

(21) Application number: **23186126.1**

(22) Date of filing: **18.07.2023**

(51) International Patent Classification (IPC):
**G06T 7/11** *(2017.01)*  **G06N 3/045** *(2023.01)*
**G06N 3/08** *(2023.01)*  **G06T 7/70** *(2017.01)*
**G06V 10/774** *(2022.01)*

(52) Cooperative Patent Classification (CPC):
**G06T 7/11; G06N 3/045; G06N 3/0475;
G06N 3/094; G06T 7/10; G06T 7/70; G06V 10/25;
G06V 10/774;** G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.08.2022  CN 202210914623**

(71) Applicant: **Robert Bosch GmbH
70442 Stuttgart (DE)**

(72) Inventors:
• **QIU, Xuchong
  Shanghai, 200335 (CN)**
• **GAO, Yi
  Shanghai, 200335 (CN)**

(54) **A TRAINING METHOD AND AN IMAGE INSTANCE SEGMENTATION METHOD FOR AN IMAGE MASK GENERATOR**

(57) The present disclosure provides a training method and an image instance segmentation method for an image mask generator, the training method comprising: selecting a sample image from two sets of sample images to input a generative adversarial network comprising a generator and a discriminator, each sample image comprising a target object, a target object of the first set of sample images among the two sets of sample images being unblocked, and a target object of the second set of sample images being partially blocked; the generator is used to generate the masks of the two sample images, the mask of each sample image being used for predicting the target object of the sample image; the masks of the generated two sample images are inputted into the discriminator, and the adversarial loss functions are constructed for the discrimination results of the generated masks of the two sample images according to the discriminator; the parameters of the generator are updated based on the adversarial loss functions to train the generator.

EP 4 318 395 A1

## Description

### Technical Field

The present disclosure relates to the field of image recognition, in particular to a training method and an image instance segmentation method for an image mask generator, a computer program product, and a computer device.

### Background

Image segmentation serves as a basis for computer vision, and has become a hotspot in the field of image understanding. Image segmentation generally involves different tasks such as target detection, semantic segmentation, instance segmentation, etc. Specifically, the deep learning-based instance segmentation method is being increasingly applied in the field of image understanding due to its high performance. Current instance segmentation methods based on conventional deep learning can obtain accurate instance segmentation results for unblocked image regions, but the instance segmentation results for blocked image regions are poor.

However, blocking between objects is prevalent in the real world and is a major obstacle to improving the accuracy and effectiveness of current instance segmentation methods. Therefore, there is an urgent need for an improved image instance segmentation method generally suitable for blocked and unblocked image regions, improving the accuracy and reliability of the instance segmentation results of blocked image regions.

### Summary

The present disclosure provides a training method and an image instance segmentation method for an image mask generator, a computer program product, and a computer device to at least address some technical issues in the prior art.

According to one aspect of the present disclosure, a training method for an image mask generator is provided, comprising: selecting and inputting a sample image from two sets of sample images to a generative adversarial network comprising a generator and a discriminator, each sample image comprising a target object, a target object of the first set of sample images among the two sets of sample images being unblocked, and a target object of the second set of sample images being partially blocked; using the generator to respectively generate a mask of the two sample images, the mask of each sample image being used to predict a target object in the sample image; inputting the generated masks of the two sample images to the discriminator, and constructing an adversarial loss function for the discrimination results of the generated masks of the two sample images based on the discriminator.

Thus, the training samples used to train the generator comprise sample images with unblocked target objects and sample images with partially blocked target objects. The generator can generate image masks without blocked objects and with blocked objects for two different categories of sample images. The discriminator determines the categories of the generated masks of two sample images and constructs adversarial loss functions based on the determination results. By leveraging the dynamic game or confrontational training of the generator and the discriminator in the generative adversarial network (GAN), a generator with robustness can be easily obtained. Even if the trained generator is used for predicting the masks of partially blocked image regions, the predicted mask is also very similar to the predicted mask in the unobstructed image region, and the mask of the target object in the unobstructed region can be intelligently filled to a certain extent, thereby successfully fooling the discriminator or having a very low probability of being recognized by the discriminator, and then improving the intelligence, accuracy and reliability of the generator for instance segmentation of the blocked image region.

Optionally, the adversarial loss function comprises: The adversarial loss function comprises a stack of a first loss item and a second loss item, wherein the first loss item is constructed based on a first discrimination result of the discriminator for a mask of the first sample image generated by the generator, the first sample image being taken from the first set of sample images; the second loss item is constructed based on a second discrimination result of the discriminator for a mask of the second sample image generated by the generator, the second sample image being taken from the second set of sample images.

Optionally, the first discrimination result comprises: a probability that a mask of the first sample image generated by the generator is a mask of an image with unblocked target objects, according to the estimation of the discriminator; the second discrimination result comprises: The discriminator estimates a probability that a mask of the second sample image generated by the generator is a mask of an image with at least partially blocked target objects, according to the estimation of the discriminator.

Thus, the adversarial loss function embodies both the probability of the discriminator to discriminate the mask of the first set of images generated by the generator as an unblocked image and the probability of the discriminator to discriminate the mask of the second set of images generated by the generator as an at least partially blocked image, thereby revealing the total loss of the discriminator, wherein the second loss item forms the confrontation item between the discriminator and the generator. The discriminator and the generator respectively oppose each other for the purpose of improving and reducing the item loss during the training process.

Optionally, using the generator, a mask of the two sample images is generated respectively, comprising: generating, with the generator, a pixel-level mask probability of a target object in the two sample images, respectively.

As such, implementing the training to obtain an image mask generator for pixel-level instance segmentation.

Optionally, the training method further comprises: Implementing object detection on the two sample images to acquire the annotated images of the two sample images, each annotated image comprising an annotated result of a bounding box of a target object in the sample image; the two sample images are inputted into the generative adversarial network, comprising: inputting the annotated images of the two sample images into the generative adversarial network; using the generator to generate the masks of the two sample images, respectively, comprising: generating, with the generator, the masks of the target objects with the annotation results in the two sample images, respectively.

As such, based on the target objects identified by object detection, the annotated images with the annotation results with the bounding box of the target object are used as the training samples, facilitating the generator to generate a mask for the image region containing the target object in the image, and providing an effective training sample.

Optionally, the training method comprises a plurality of iterative training processes to reduce a mask probability distribution difference of a target object in two sample images generated by the generator, and/or enhancing the capability of the discriminator to differentiate between mask categories of the two sample images generated by the generator for training purposes, and repeating the training steps of the generator.

Optionally, generating, with the generator, a mask for the two sample images, respectively, comprising: generating, with the generator, a mask of a plurality of target objects in at least one of the two sample images, inputting the generated masks of the two sample images into the discriminator during each training process, comprising: filtering the generated masks of the plurality of target objects in the at least one sample image to obtain the mask of one target object in each sample image, inputting the mask of one target object in each sample image into the discriminator, and constructing the adversarial loss function based on the discrimination result of the discriminator for the generated mask of one target object in each sample image.

As such, during a single training process, selecting a mask of one target object in each sample image generated by the generator for training, facilitating the learning of the distribution pattern of the mask of a single target object, and generating an image mask generator for predicting different instances.

Optionally, determining whether the training termination condition is satisfied; if yes, terminating the training; if no, repeating the training steps of the generator. The training termination condition comprises: terminating the iterative training processes when a loss function value determined by the adversarial loss function is within the first predetermined threshold range; and/or, obtaining a pixel count distribution map of the mask probability of the target object in the two sample images, calculating the standard deviation of a pixel count distribution of the mask probability according to the pixel count distribution map of the mask probability, and terminating the iterative training processes when a difference of standard deviation of the pixel count distribution of the mask probability of the target object in the two sample images is within the second predetermined threshold range.

As such, the generator of robustness is trained to achieve training purposes of both reducing the mask probability distribution difference of a target object in the two sample images generated by the generator as well as enhancing the capability of the discriminator to differentiate between mask categories of the two sample images generated by the generator, thus achieving the Nash equilibrium.

Optionally, each set of sample images in the two sets of sample images comprises a plurality of sample images, each sample image comprising at least one target object region, each target object region comprising at least one target object, the plurality of iterative training processes comprising: During each iterative training process, selecting and inputting a sample image from the two sets of sample images as a training sample into the generative adversarial network, and passing through the plurality of sample images in each set of sample images through the plurality of iterative training processes; and/or, each sample image comprises a plurality of target object regions, different target object regions of the same sample image being used as a training sample into the generative adversarial network during different iteration training processes to pass through different target object regions of the same sample image.

As such, the utilization of each image as a training sample is improved, providing more extensive training data.

Optionally, the second set of sample images involves a virtual image that forms the partially blocked target object by constructing a relative location relationship between the blocked and unblocked initial target object.

Optionally, there are a plurality of the partially blocked target objects in the virtual image, the training method further comprising: obtaining a mask truth value of an unblocked initial target object corresponding to a partially blocked target object among the plurality of partially blocked target objects; generating, with the generator, the masks of the two sample images, respectively, comprising: generating, with the generator, the masks of the plurality of partially blocked target objects in the virtual image; and, using the acquired mask true value of the corresponding unblocked initial target object, and filtering the generated masks of the plurality of partially blocked target objects to acquire the mask of one partially blocked target object generated by the generator.

Thus, using the virtual image as a training sample to obtain the mask truth value of the partially blocked target object facilitates the filtering of the generated masks of the plurality of target objects with the mask truth value of one of the target objects when the generator generates the masks of the plurality of partially blocked target objects. During a single training process, each set of images retains a mask of the target object for training, facilitating the learning of the distribution pattern of mask probability of a single target object, and generating an image mask generator for predicting different instances.

Optionally, implementing object detection of the two sample images, comprising: generating a bounding box of the partially blocked target object in the virtual image, obtaining the annotated images of the set of virtual images, according to a bounding box of the unblocked initial target object; or, generating a binary mask of the partially blocked target object in the virtual image, and generating a bounding box of the partially blocked object in the virtual image according to the generated binary mask.

Thus, using the virtual image as a training sample facilitates accurate target detection of the partially blocked target object according to the bounding box of the unblocked initial target object before generating the mask of the virtual image, obtaining a reliable bounding box, applicable to the blocked portion covering at least a portion of bounding box of the unblocked initial target object, and unable to accurately detect the object of the partially blocked target object; and the unblocked area of the partially blocked target object may be continuously based on the detection of the bounding box, and the bounding box can be determined based on the binary mask of the partially obscured object.

Optionally, the two sample images comprise a real image from the second set of sample images, implementing object detection of the two sample images to acquire the annotated images of the two sample images, respectively, comprising: The object detection of the one real image is implemented by automatic annotation and/or manual annotation to obtain the annotated image of the one real image.

As such, the training samples of the image mask generator are not limited to virtual images, but real images can also be used, for which the object detection is implemented by manual annotation or a combination of manual annotation and automatic annotation, thereby improving the accuracy of the annotation results and enhancing the training efficiency of the generative adversarial network.

Optionally, the annotated image of each sample image further comprises an annotated result of a category of a target object in the sample image, the training method further comprising: generating, with the generator, a category of a target object in the two sample images, respectively.

As such, the trained image mask generator is capable of outputting not only a pixel-level target object mask, but also a target object category for use in image instance segmentation.

In another aspect, the examples of the present disclosure also provide an image instance segmentation method, comprising: implementing the object detection of a received image to identify a bounding box of a target object in the received image; using the image mask generator to generate a mask of the target object based on the bounding box, wherein the image mask generator is acquired using a training method according to the examples of the present disclosure.

Optionally, the image instance segmentation method further comprises: implementing object detection of the received image to identify the category of a target object in the received image; outputting the mask and category of the target object with the help of the image mask generator.

Thus, the image instance segmentation method according to the examples of the present disclosure can obtain accurate instance segmentation results not only for images with unblocked objects, but also for images with blocked objects. The pre-trained image mask generator is adopted to obtain accurate and reliable instance segmentation results, enhancing the understanding of the instance segmentation method for image contents, especially accuracy and reliability, and expanding the application of the instance segmentation technology in the real world of presenting complex image contents.

In another aspect, the examples of the present disclosure also provide a computer program product comprising a computer program that, when executed by a processor, implements a training method of an image mask generator according to the examples of the present disclosure or an image instance segmentation method according to the examples of the present disclosure.

In another aspect, the examples of the present disclosure also provide for a computer-readable storage medium having executable code stored, which when executed implements a training method of an image mask generator according to the examples of the present disclosure or an image instance segmentation method according to the examples of the present disclosure.

In another aspect, the examples of the present disclosure also provide a computer device comprising a processor, a memory, and a computer program stored on the memory that when executed by a processor implements a training method for an image mask generator according to the examples of the present disclosure or an image instance segmentation method according to the examples of the present disclosure.

**Description of the Drawings**

The principles, features, and advantages of the present disclosure may be better understood below by describing the present disclosure in more detail with reference to the appended drawings. The drawings include:

Fig. 1 shows a flow diagram of a training method for an image mask generator according to an example of the present disclosure;

Fig. 2 shows a flow diagram of a training method for an image mask generator according to another example of the present disclosure;

Fig. 3 shows a flow diagram of an instance segmentation model and a processing process of a generative adversarial network for a first sample image and a second sample image, according to an example of the present disclosure;

Fig. 4 shows a schematic view of a first sample image according to an example of the present disclosure;

Fig. 5 shows a schematic view of a second sample image according to an example of the present disclosure;

Fig. 6 shows a schematic view of an annotated image of a first sample image according to the example shown in Fig. 4;

Fig. 7 shows a schematic view of an annotated image of a second sample image according to the example shown in Fig. 5;

Fig. 8 shows a schematic view of a mask of a first sample image generated by a generator during the training process;

Fig. 9 shows a schematic view of a mask of a second sample image generated by a generator during the training process;

Fig. 10 shows a flow diagram of an image instance segmentation method, according to an example of the present disclosure.

**Description of Embodiments**

In order to make the above purposes, features and beneficial effects of the present disclosure more apparent and easier to understand, the specific examples of the present disclosure are described in detail below in conjunction with the appended drawings. The various examples in this description are described in a progressive manner. Each example focuses on different areas from the other examples. The same or similar parts of each example may be shown to each other.

It should be understood that the expression "first", "second", etc., is for descriptive purposes only and is not to be understood as indicating or implying relative importance, nor is it to be understood as implying an indication of the number of indicated technical features. A feature defined as "first" or "second" may expressly or implicitly represent including at least one of the features.

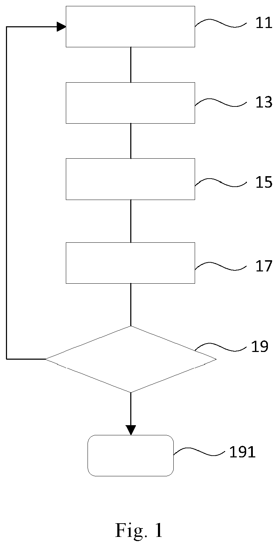

Referring to Fig. 1, Fig. 1 shows a flow diagram of a training method for an image mask generator, according to an example of the present disclosure.

In some examples, the training method for the image mask generator comprises:

Step 11: selecting and inputting a sample image from each of the two sets of sample images into the generative adversarial network comprising a generator and a discriminator, each sample image comprising a target object, the target object of each sample image of the first set of sample images among the two sets of sample images being unblocked, and the target object of each sample image of the second set of sample images being blocked;

Step 13: generating, with the generator, the masks of the two sample images, the mask of each sample image being used to predict a target object in the sample image;

Step 15: inputting the generated masks of the two sample images into the discriminator and constructing an adversarial loss function according to the discriminator's discrimination result of the generated mask of the two sample images;

Step 17: updating the parameters of the generator according to the adversarial loss function to train the generator.

In some examples of the present disclosure, in Step 13, the masks of the two sample images are generated with the generator, respectively, comprising: generating, with the generator, a pixel-level mask probability of a target object in the two sample images, respectively.

In some examples of the present disclosure, the adversarial loss function comprises: The adversarial loss function comprises the stack of a first loss item and a second loss item, wherein the first loss item is constructed based on a first discrimination result of the discriminator for a mask of a first sample image generated by the generator, the first sample image being taken from the first set of sample images; the second loss item is constructed based on a second discrimination result of the discriminator for a mask of a second sample image generated by the generator, the second sample image being taken from the second set of sample images.

In some examples of the present disclosure, the discriminator estimates a probability that a mask of a first sample image generated by the generator is a mask of an image with unblocked target objects; the second discrimination result comprises: The discriminator estimates a probability that a mask of a second sample image generated by the generator is a mask of an image with at least partially blocked target objects.

In some examples of the present disclosure, the training method further comprises a plurality of iterative training processes that achieve a Nash equilibration for training purposes by reducing a difference in mask probability distribution of a target object in two sample images generated by the generator and enhancing the capability of the discriminator to differentiate between mask categories of two sample images generated by the generator for repeating the training steps 11, 13, 15 and 17 on the generator; at the beginning of each training, different sample images are selected from the two sets of sample images and inputted into the generative adversarial network. The mask category comprises a mask category for an image with unblocked target objects or a mask category for an image with at least partially blocked target objects.

In some examples of the present disclosure, the training method may further comprise constructing the generative adversarial network.

In some examples of the present disclosure, the training method may further comprise Step 19 to determine whether the training termination condition is satisfied; if yes, proceed to Step 191 to terminate the training; if no, proceed to Step 11 to repeat the training steps 11, 13, 15 and 17 on the generator.

In some examples of the present disclosure, the training termination condition comprises: terminating the iterative training processes when the loss function value determined according to the adversarial loss function is within the first predetermined threshold range; and/or, obtaining a pixel count distribution map of the mask probability of the target object in the two sample images, calculating the standard deviation of a pixel count distribution of the mask probability according to the pixel count distribution map of the mask probability, and terminating the iterative training processes when the difference in the standard deviation of the pixel count distribution of the mask probability of the target object in the two sample images is within the second predetermined threshold range.

Any of the above two training termination conditions may be used as the discrimination criteria in Step 19 or both the two termination conditions are used as the discrimination criteria in Step 19. In the latter case, the two termination conditions may be required to be met simultaneously, or any of the two termination conditions shall be met before the training is terminated.

In some examples of the present disclosure, each set of sample images may comprise a plurality of sample images, each sample image may comprise a plurality of objects, wherein the target object can be the mask prediction target object in each sample image. Unblocked target objects in the first set of sample images comprise: One or more target objects in each sample image of the first set of sample images are in an unblocked state, and the target objects in the second set of sample images are in a partially blocked state, comprising: There may be at least one partially blocked target object in each sample image of the second set of sample images. In order to train the mask generator with robustness, each set of sample images from the two sets of sample images provided should contain as many categories of target objects as possible, comprising target objects of different features in each set of sample images with different shapes, different sizes, different categories, different colors, different numbers, and/or different locations.

Accordingly, in Step 11, the two sample images may be randomly selected and inputted into the generative adversarial network, most notably from the two sets of sample images respectively, such that the target objects in the two sample images have different blocked states. As to whether a target object included in the selected two sample images has the same or similar features, it may be undefined, for example, that the randomly selected target object included in the two sample images may have different features such as size, shape, category, color, number, location, etc. By randomly selecting and inputting the two sample images into the generative adversarial network, the generator and the discriminator may learn more about the difference between masks of the blocked objects and the unblocked objects from the distribution of generated mask probability of the target object in the two sample images, rather than merely or primarily learn the difference between masks of the blocked object and the unblocked object from feature information of the shape, size, category, etc.

In the training method for the image mask generator according to the examples of the present disclosure, the training samples for training the generator comprise the sample images with unblocked target objects and the sample images with partially blocked target objects. The generator can generate images masked without object and blocked between objects respectively, and the discriminator judge judges can judge the mask of the two samples and build anti-loss function based on the judgment result. The generator can generate masks for images with unblocked objects and masks for images with blocked objects; the discriminator discriminates the generated masks of the two sample images and constructs the adversarial loss functions based on the discrimination results. By leveraging the dynamic game or confrontational training of the generator and the discriminator in the generative adversarial network (GAN), a generator with robustness can be easily obtained. Even if the trained generator is used for predicting the masks of partially blocked image regions, the predicted mask is also very similar to the predicted mask in the unobstructed image region, and the mask of the target object in the unobstructed region can be intelligently filled to a certain extent, thereby successfully fooling the discriminator or having a very low probability of being recognized by the discriminator, and then improving the intelligence, accuracy and reliability of the generator for instance segmentation of the blocked image region.

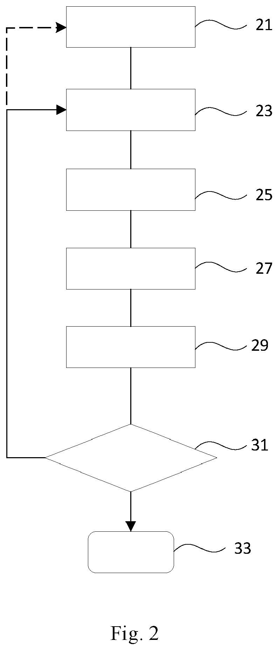

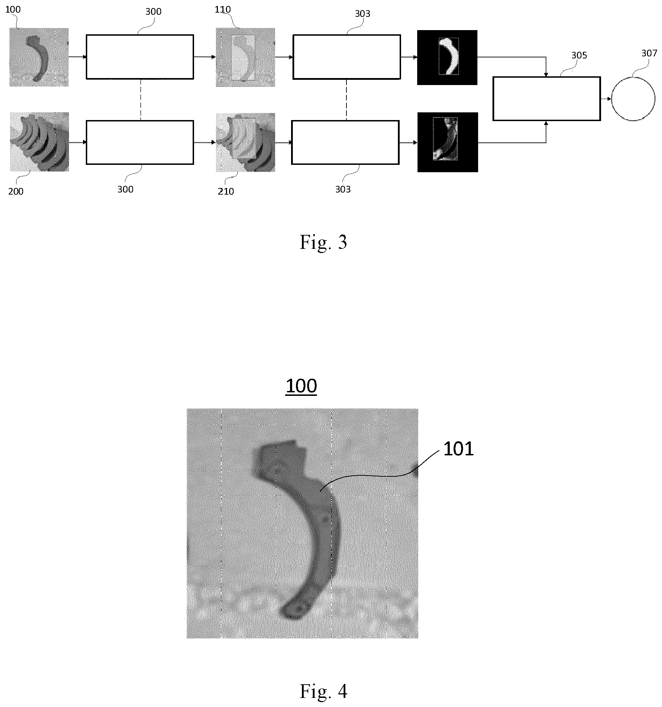

Referring to Fig. 2, Fig. 2 shows a flow diagram of a training method for an image mask generator according to another example of the present disclosure, and Fig. 3 shows a flow diagram of processing a first sample image and a second sample image utilizing an instance segmentation model and a generative adversarial network according to an example of the present disclosure.

In some examples of the present disclosure, the training method comprises:

Step 21: an object detection is performed on two sample images to obtain an annotated image of the two sample images, respectively. The annotated image of each sample image comprises an annotation result of a bounding box of a target object in the two sample images, the target object in one of the two sample images is in an unblocked state, while the target object in the other sample image is in a partially blocked state.
Step 23: inputting the annotated image of the two sample images into a generative adversarial network comprising a generator 303 and a discriminator 305;
Step 25: generating, with the generator 303, a mask of a target object having the annotation result in the two sample images according to the annotated images of the two sample images;
Step 27: inputting the generated masks of the two sample images into the discriminator 305 to construct an adversarial loss function 307 based on the discrimination result of the discriminator 305 for the generated masks of the two sample images;
Step 29: updating the parameters of the generator 303 according to the adversarial loss function 307 to train the generator 303.

In some examples of the present disclosure, in Step 21, the two sample images are taken from two sets of sample images, respectively; the two sets of sample images comprise a first set of sample images and a second set of sample images; the first set of sample images comprises a plurality of first sample images, one or more target objects of each of the first sample images are in an unblocked state; the second set of sample images comprises a plurality of second sample images, at least one target object of each of the second sample images are in a partially blocked state.

As shown in Figs. 4-5, a schematic view of a first sample image 100 and a second sample image 200 according to an example of the present disclosure is shown, respectively. In this example, there is one unblocked target object 101 in the first sample image 100 and at least one partially blocked target object 201 in the second sample image 200.

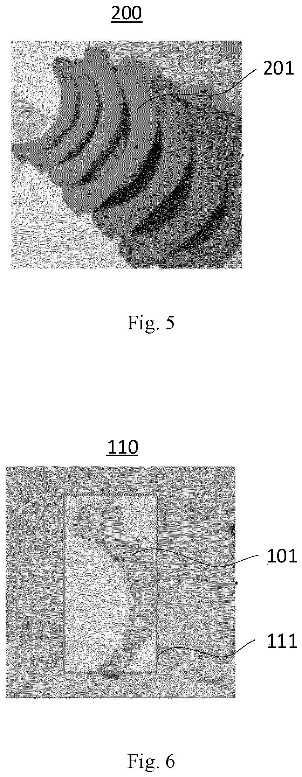

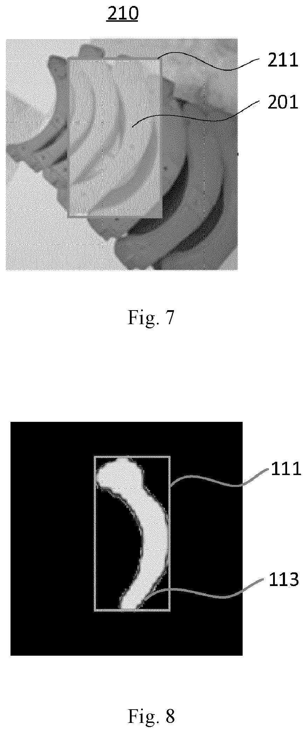

As shown in Fig. 3, in some examples of the present disclosure, object detection of the two sample images in Step 21 comprises: Object detection of the first sample image 100 and the second sample image 200 is performed by using the same object detector 300, wherein the same object detector 300 is a pre-trained model with fixed parameters (e.g., weights), is shown in Fig. 3 to more clearly show that the first sample image 100 and the second sample image 200 are otherwise processed by the object detector 300 to output respective annotated images, illustrating two object detectors 300 connected in dashed lines, but essentially the two object detectors 300 are the same object detector 300. The bounding box may be a two-dimension bounding box, as shown in Figs. 6 and 7, illustrating the annotated image 110 of the first sample image and the annotated image 210 of the second sample image, respectively, and a bounding box 111 of the unblocked target object 101 is also given in Fig. 6; Fig. 7 further illustrates a bounding box 211 of the partially blocked target object 201, wherein the second sample image 200 comprises a plurality of target objects, with only the annotation result of the bounding box 211 of one target object 201 being shown.

In some examples of the present disclosure, in Step 21, the annotated image of each sample image obtained by object detection further comprises an annotated result for a category of a target object in the sample image. The training method further comprises: Using the generator 303 to generate categories of target objects with the annotation results in the two sample images, the category information of target objects with the annotation results in the two sample images may be outputted in Step 25 with the masks of target objects with the annotation results in the two sample images, thereby training the generator 303 obtained for predicting the image mask not only to output pixel-level target object masks, but also to output target object categories for image instance segmentation.

The target object is identified based on the object detection, and the annotated images with annotation results of the bounding box of the target objects are used as the training samples to facilitate the generator 303 to generate a mask for the image region containing the target objects in the sample image, providing valid training samples. Further, the instance segmentation model shown in Fig. 3 comprises an object detector 300 and a generator 303, the generator 303 being specifically a mask generator 303; here, a pre-trained object detector 300 is adopted to train the mask generator 303 with the generative adversarial network (GAN).

In some examples of the present disclosure, Step 23 further comprises constructing the generative adversarial network (GAN). The GAN in the examples of the present disclosure is different from the training scene and training purpose of existing GANs. The purpose and use of existing GANs for training will not be repeated here. The generator of the GAN according to the examples of the present disclosure is used to make predictions of image masks, and the two inputs of the discriminator of the GAN are from the two outputs of the generator 303; the two input ends of the discriminator 305 are used to receive masks of two sample images generated by the generator 303, the two sample images having different blocked states of objects, thereby accounting for object blocking of images in the training process of the GAN.

The GAN shown in Fig. 3 comprises a generator 303 and a discriminator 305, i.e., the generator 303 in the instance segmentation model is trained concurrently with the training of the GAN, because the GAN and the instance segmentation model share the generator 303; it may also be considered as adding a discriminator 305 for adversarial training on the generator 303 in the instance segmentation model.

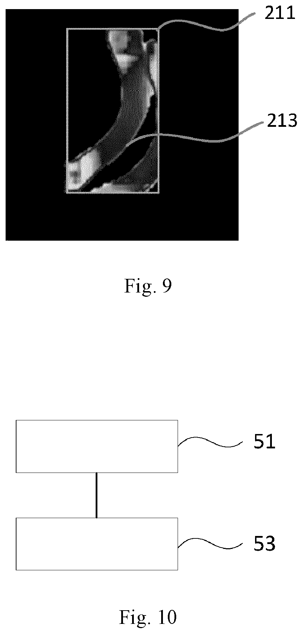

Referring further to Fig. 2, in conjunction with Figs. 8 and 9, in some examples of the present disclosure, the masks of target objects having the annotation results in the two sample images with the generator 303 are generated in Step 25, comprising: generating, with the generator 303, a pixel-level mask probability for target objects with the annotation results in the two sample images, for example, generating, with the generator 303, a pixel-level mask probability for each of the sample images within a target region of the target objects having the annotation results, the mask probability being greater than or equal to 0, or less than or equal to 1. The target region may be an image region occupied solely by the target object or may be an image region defined by the bounding box of the target object, as shown in Figs. 8 and 9, respectively illustrating a pixel-level mask probability within the image region defined by the bounding boxes 101 and 111 generated with the generator 303 (e.g., during the first training process). Because the target object in the first sample image 100 is not blocked, the bounding box 113 of the mask of the target object 101 in the first sample image 100 shown in Fig. 8 is clear and the mask probability of the target object 101 is evenly distributed, i.e., the mask probability values for each pixel of the target object 101 occupied within the mask's bounding box 113 are approximately, e.g., 1 all, while the mask's bounding box of the target object 201 in the second sample image 200 is blocked in Fig. 9 is obscured and the masked region of the target object of the target object 201 is distributed within the target object of the second sample image 200. The pixel-level mask probability size of the target object in Fig. 8 and Fig. 9 may be reflected by the gray scale or color level of the pixel of the target object region, e.g., the pixel-level mask probability size may be directly proportional to the gray scale value or color level of that pixel, Fig. 8 and Fig. 9 being shown in gray scale, and the mask probability generated in actual applications may be represented in different colors.

When the training of the generator 303 is complete, a binary or thresholded pixel-level image mask probability generated by the generator 303 may be applied to acquire a binary mask of an object instance for instance segmentation, so the accuracy of the instance segmentation results depends on the accuracy of the pixel-level image mask probability generated by the generator 303. For instances where there is object blocking in the corresponding image, with untrained image mask generators, there is an uneven distribution of mask probability for the target object. Different pixel counts may be distributed between 0 and 1, e.g., the mask predictions shown in Fig. 9 correspond to the two-end area of the target object 201 with a higher mask probability of masking (a relatively bright area within the bounding box 213 of the mask in Fig. 9). The mask predictions shown in Fig. 7 correspond to the central area of the target object 201 with a lower mask probability of masking (a relatively dark area within the bounding box 213 of the mask in Fig. 9). If this mask probability distribution is generated by an untrained generator at the initial stage, the masks located in the central area may be filtered out because the probability value is below the threshold, and subsequent binarization is performed directly. Only the masked portion located in the two end areas is retained, resulting in an inability to fully and correctly segment the instance. Further, because the bounding box of the masks of the target objects generated by the generator is unclear at this time, the mask probability of the plurality of target objects may be coupled at the boundary as a continuous binary mask after the binary processing, resulting in the misidentification of the plurality of objects as a single instance. To achieve the training purposes of reducing the mask probability distribution difference of a target object in the two sample images generated by the generator 303 and enhancing the capability of the discriminator 305 to differentiate the mask category of the two sample images generated by the generator 303 to achieve the Nash equilibrium, and iterating the generator 303 so that the generator 303 can be used for images with blocked objects for predicting the masks with unblocked objects and improving the performance of the generator 303. The mask category comprises a mask category for images with unblocked target objects or a mask category for images with at least partially blocked target objects.

It should be noted that in the field of image processing, the concept of a "blocking" (or masking) draws upon the concept of a "mask" in semiconductor manufacturing. In particular, the image to be processed may be partially or fully blocked (or understood to be covered) with the selected graphic or the like to control the area of the image processing. The graphic used for coverage or masking, etc., may be referred to as a mask. The mask may generally be used to extract areas of interest in the image or shield certain areas in the image or the like. In the examples of the present disclosure, the mask of the image may be a mask corresponding to a foreground object in an image frame to predict an area corresponding to the foreground object in the image frame, the mask probability comprising an instance mask probability.

In some examples of the present disclosure, the adversarial loss function 30 constructed in Step 27 comprises a stack of the first loss item and the second loss item, wherein the first loss item is constructed based on a first discrimination result of the discriminator 305 for a mask of the first sample image 100 generated by the generator 303, the first sample image 100 being taken from a first set of sample images, i.e., unblocked target objects of the first sample image 100; the second loss item is constructed based on a second discrimination result of the discriminator 305 for a mask of the second sample image 200 generated by the generator 303, the second sample image 200 being taken from a second set of sample images, i.e., partially blocked target objects of the second sample image 200.

In some examples of the present disclosure, the first discrimination result comprises: The discriminator 305 estimates a probability that the mask of the first sample image 100 generated by the generator 303 is a mask of an image with unblocked target objects; the second discrimination result comprises: The discriminator 305 estimates a probability that the mask of the second sample image 200 generated by the generator 303 is a mask of an image with at least partially blocked target objects.

In some examples of the present disclosure, when the discriminator 305 determines that the mask of the first sample image 100 generated by the generator 303 is the mask of an image with unblocked target objects, the first discrimination result is 1. When the discriminator 305 determines that the mask of the second sample image 200 generated by the generator 303 is the mask of an image with at least partially blocked target objects, the second discrimination result is 1; for the discriminator 305, the training purpose is that the larger the sum of the first discrimination result and the second discrimination result, the better, while for the generator 303, the training purpose is that the smaller the second discrimination result, the better.

As such, the adversarial loss function 307 reflects both the probability of the discriminator determining the masks of the first set of images generated by the generator 303 to be images with unblocked target objects and the discriminator 305 determining the masks of the second set of images generated by the generator 303 to be images with at least partially blocked target objects, thereby embodying the total loss of the discriminator 305, wherein the second loss item forms the adversarial item between the discriminator 305 and the generator 303; during the training process, the discriminator 305 and the generator oppose each other for improving and reducing the loss of this item.

In particular, the adversarial loss function $L_{adv}$ may be defined as:

$$L_{adv} = E_x \big[ \log(D(x)) \big] + E_z \big[ \log(1 - D(G(z))) \big]$$

wherein $x$ is the mask of the (unblocked) target object with an annotation result for the first sample image 100 generated with the generator 303 in Step 25; specifically, $x$ can be the pixel-level mask probability of the target object 101 from the first sample image 100 generated by the generator 303; $D(x)$ is the probability that the mask $x$ of the target object from the first sample image 100 generated by the generator 303 according to the estimation of the discriminator 305 is a mask of the image with unblocked target objects; $E_x$ is the expectancy value of the mask discrimination loss function $log(D(x))$ of all unblocked target objects. $G(z)$ is the mask of the (partially blocked) target object with an annotation result from the second sample image 200 generated by the Generator 303 in Step 25; specifically, $G(z)$ can be the pixel-level mask probability of the target object 201 from the second sample image 200 generated by the generator 303; $D(G(z))$ is the probability that the mask $G(z)$ of the target object from the second sample image 200 generated by the generator 303 according to the estimation of the discriminator 305 is a mask of the image with unblocked target objects; $E_z$ is the expectancy value of the mask discrimination loss function $log(1-D(G(z))$ of all partially blocked target objects.

During training, the generator 303, i.e., $G(.)$ item, attempts to minimize the value of the adversarial loss function $_{Ladv}$, however the discriminator 305 $D(.)$ attempts to maximize the value of the adversarial loss function $L_{adv}$ and form adversarial training. The adversarial loss function $_{Ladv}$ takes into account blocking factors between objects and is a loss function related to blocking. By adversarial training, $G(z)$ will have more similarity to $x$. Because $x$ is the mask probability of the image whose target objects are not blocked according to the prediction of the generator 303, the mask $x$ has a high quality. The GAN-based training method achieves the training purpose of reducing the mask probability distribution difference of the target object in the two sample images generated by the generator 303 and enhancing the capability of the discriminator 305 to differentiate the mask categories of two sample images generated by the generator 303 for Nash equilibrium. Thus, $G(z)$ will have a higher quality close to the mask $x$ after the training; also, an image mask generator 303 with higher performance is obtained, which can generate accurate and reliable instance segmentation results even for images with partially blocked target objects. The mask category comprises a mask category that belongs to an image with unblocked target objects or a mask category that belongs to an image with at least partially blocked target objects. In some examples, the training method further comprises a plurality of iterative training processes, i.e., repeating steps 23, 25, 27 and 29 of training the generator 303 that select different sample image inputs from the two sets of sample images at the start of each training, the generated adversarial network, the steps 23, 25, 27 and 29 forming a circulation.

In some examples, Step 21 may be one step within the circulation of the iterative training process before Step 23. In some other examples, Step 21 may be a step outside of the circulation of the iterative training processes, i.e., after object detection is performed on each of the two sets of sample images in Step 21, then repeat execution of the loops comprising the steps 23, 25, 27 and 29 begins with one annotated image inputted into the generative adversarial network from the annotated images of the two sets of sample images in each circulation.

In some examples, the training method further comprises: updating the parameters of the discriminator 305 according to the adversarial loss function 307. The parameters of the generator 303 and the discriminator 305 may be updated simultaneously upon completion of a single training or at different training stages. For example, the parameters of the discriminator 305 may be fixed firstly in the first training stage, the parameters of the generator 303 are updated according to the adversarial loss function 307 and the parameters of the generator 303 are fixed again in the second training stage, and the parameters of the discriminator 305 are updated according to the adversarial loss function 307.

In some examples, the training method further comprises: Step 31: determine whether the training termination condition is satisfied; if yes, terminate the training; if no, return to perform Step 21 or Step 23 (depending on whether Step 21 is located within the circulation).

In some examples, the termination conditions of the plurality of iterative training processes comprise: terminating the iterative training processes when the loss function value determined according to the adversarial loss function 307 is within the first predetermined threshold range; and/or, acquiring a pixel count distribution map for the mask probability of the two sets of images using a mask of the two sets of images generated by the generator 303, calculating standard deviation of the pixel count distribution for the mask probability according to the pixel count distribution map for the mask probability, and terminating the iterative training processes when the difference of the standard deviation of the pixel count distribution of the masking probability of the two sets of images is within the second predetermined threshold range. Any of the above two training termination conditions may be used as the discrimination criteria in Step 31, or the above two termination conditions may be used simultaneously as the discrimination criteria in Step 31. In the latter case, the two termination conditions may be required to be met simultaneously, or any of the two termination conditions shall be met first before the training is terminated.

Specifically, the iterative training processes may be terminated when the loss function value determined from the adversarial loss function 307 is less than 0.1; and/or the iterative training processes may be terminated when the standard deviation of the pixel count distribution of the mask probability of the two sets of images is less than the preset value (e.g., 0.1). The first predetermined threshold range and the second predetermined threshold range may both be adjusted according to actual needs, application scenarios, or prediction effects.

In some examples, the relational graph between the mask probability of the target object in each sample image and the pixel count can be plotted based on the mask probability of the target object in the two sample images generated by the Generator 303 (as shown in Figs. 8 and 9). For example, the horizontal axis in the two-dimensional coordinate system is the mask probability within 0-1, and the vertical axis may be the pixel count, or the horizontal axis refers to the pixel count, and the vertical axis refers to the mask probability. A large number of pixels are distributed in a mask probability close to 1, and for the mask probability of the target object as shown in Fig. 9, the mask probability of all pixels of the target object may be diffused between 0 and 1. This makes the mask probability distribution of the target object in the two sample images different greatly. In order to measure this difference, quantified indicators can be used to characterize, for example, in some examples, the difference by the standard deviation of the pixel count distribution of the mask probabilities of the two sample images. In other examples, other metrics for measuring the difference in mask probability distribution may also be employed.

Based on the training process of the above termination conditions, by achieving the training purposes of reducing the mask probability distribution difference of target objects in the two sample images generated by the generator 303 and enhancing the capability of the discriminator 305 to discriminate the mask category of the two sample images generated by the generator 303 for Nash equilibrium, a generator 303 with the robustness can be obtained.

In some examples, in Step 25, the generator 303 is used to generate the masks of two sample images, respectively, comprising: Using the generator 303 to generate the masks of a plurality of target objects in at least one sample image (e.g., the second sample images) of the two sample images, each training process may further perform a step of filtering the generated masks of the plurality of target objects in the at least one sample images to obtain a mask of one target object in each sample image and input the mask of one target object of each sample image into the discriminator 305.

In some examples, the two sets of sample images comprise a set of virtual images having the partially blocked target objects, the virtual image forming the partially blocked target objects by constructing a relative location relationship of the blocked and unblocked initial target objects. a plurality of the partially blocked target objects are present in the virtual image, the training method further comprising: obtaining a mask truth value of one unblocked object for the plurality of partially blocked target objects, and the mask truth value may be automatically generated by the system. In Step 25, the generator 303 is used to generate the masks of the two sample images, respectively, comprising: generating the masks of the plurality of partially blocked target objects in the virtual image with the generator 303; and using the mask truth value of the acquired one of the partially blocked target objects in an unblocked state to filter the generated masks of the plurality of partially blocked target objects, obtaining the mask of the one partially blocked target object generated by the generator 303 and inputting the mask of the one partially blocked target object into the discriminator 305.

In some examples, object detection of the two sample images in Step 21 comprises: generating a bounding box of the partially blocked target object in the virtual image according to the bounding box of the unblocked initial target object to acquire the annotated images of one set of virtual images. For example, the unblocked initial target object has a bounding box that covers at least a portion of the initial target object to form a situation where the partially blocked target object is blocked, or where the mask covers a portion of the initial target object such that other unblocked portions of the initial target object are not in communication with one another that is truncated by the mask. Employing the bounding box of the unblocked initial target object as the bounding box of the partially blocked target object in the virtual image facilitates obtaining a reliable bounding box, and subsequent masking prediction by the generator 303 based on the reliable boundary frame facilitates improving the performance of the trained generator 303. In some examples, the training method further comprises: obtaining a bounding box of the unblocked initial target object, the bounding box of the unblocked initial target object being determined according to a mask truth value of the unblocked initial target object automatically generated by the system.

In some other examples, object detection of the two sample images in Step 21 comprises: generating a binary mask of a partially blocked target object in the virtual image, generating a bounding box of the partially blocked object in the virtual image according to the generated binary mask, for example, where the unblocked area of the partially blocked target object in the virtual image is continuous without affecting the detection of the bounding box thereof.

Using the virtual image as a training sample to facilitate obtaining the mask truth value of the partially blocked target object and to facilitate filtering of the generated masks of the plurality of target objects with the truth values of one of the target objects when the generator 303 generates masks of images with the plurality of blocked target objects. During a single training process, each set of images retains a mask of the target object for training, which is conducive to improving the training efficiency of the generative adversarial network.

Using the virtual image as a training sample also facilitates accurate target detection of the partially blocked target object according to the unblocked bounding box of the initial target object before generating the mask of the virtual image, and obtaining a reliable bounding box for the mask covering at least a portion of the unblocked bounding box of the initial target object and failing to accurately detect the object of the partially blocked target object; and the unblocked area of the partially blocked object can be continuously determined according to the condition of the detection of the bounding box.

In some examples, the other set of sample images of the two sets of sample images may also contain a plurality of unblocked objects, and the masks of the two sample images generated separately with the generator 303 in Step 25 further comprise: Using the generator 303 to generate the masks of the plurality of unblocked target objects in the other set of sample images, using the mask truth value of one of the unblocked target objects to filter the generated masks of the plurality of unblocked target objects, obtaining the masks of the unblocked target objects generated by the generator 303 and inputting the mask of the one unblocked target object into the discriminator. During a single training process, selecting a mask of one of the target objects in each sample image generated by the generator 303 for training to facilitate learning the distribution pattern of mask probability for a single target object and to generate an image mask generator for predicting different instances.

In some examples, the two sample images may comprise a real image having the partially blocked object of interest and object detection of the two sample images, wherein the annotated images of the two sample images are taken, respectively, comprising: implementing object detection of the one real image by automatic annotation and/or manual annotation to obtain an annotated image of the one real image. The bounding box of the plurality of blocked target objects in the real image may not be fully successfully recognized by automatic annotation. At this time, the detection success rate and reliability of the target object may be improved by manual annotation.

In some examples, each set of sample images from the two sets of sample images comprises a plurality of sample images, each sample image comprising at least one target object area, each target object area comprising at least one target object, the plurality of iterative training processes comprising: In each iterative training process, selecting and inputting a sample image from each of the two sets of sample images as a training sample into the generative adversarial network, and transversing the plurality of sample images in each set of sample images through the plurality of iterative training processes; and/or each sample image comprises a plurality of target object regions, different target object regions of the same sample image being used as a training sample into the generative adversarial network during different iteration training processes to pass through different target object regions of the same sample image. As such, the utilization of each sample image as a training sample is improved to provide more extensive training data.

Similar to the example shown in Fig. 1, in the example shown in Figs. 2-9, the target object of the first set of sample images is not blocked, comprising: One or more target objects present in each first sample image are in an unblocked state. The target object of the second set of sample images is in a partially blocked state, comprising: There is at least one partially blocked target object in each of the second sample images. In order to train the mask generator with robustness, each set of sample images provided should contain as many types as possible of target objects including target objects having features having different shapes, different sizes, different categories, different colors, different numbers, and/or different locations for each set of sample images.

Accordingly, in Step 23, the annotated images of the two sample images may be randomly selected and inputted into the generative adversarial network, most notably from the two sets of sample images, such that the target objects in the two sample images have different blocked states. As to whether a target object contained in the selected two sample images has the same or similar features, it may not be defined, for example, that the target object contained in the randomly selected two sample images may have different features such as size, shape, category, color, number, location, etc. By randomly selecting and inputting the two sample images into the generative adversarial network, the generator 303 and the discriminator 305 may learn more about the difference between masks of the blocked object and the unblocked object from the distribution of generated mask probabilities of the target object in the two sample images, rather than simply or primarily learn the difference between the masks of the blocked object and the unblocked object corresponding to the target object from feature information of the shape, size, category, etc.

Referring to Fig. 9, an example of the present disclosure further provides an image instance segmentation method, comprising:

Step 51: implementing object detection of the received image to identify a bounding box of a target object in the received image;
Step 53: using an image mask generator to generate a mask of the identified target object based on the bounding box, wherein the image mask generator is acquired using a training method of the preceding examples of the present disclosure.

In some examples, the image instance segmentation method further comprises: implementing object detection of the received image to identify a category of a target object in the received image; outputting the mask and category of the target object with the image mask generator.

The image instance segmentation method according to the examples of the present disclosure can obtain accurate instance segmentation results not only for images with unblocked objects, but also for images with blocked objects. Using the pre-trained image mask generator, accurate and reliable instance segmentation results can also be obtained via the image segmentation method, improving the performance of the instance segmentation method for image content understanding, such as accuracy and reliability, and expanding the application of the instance segmentation technique in the real world of presenting complex image contents.

The examples of the present disclosure also provide for a computer program product comprising a computer program that, when executed by a processor, implements a training method according to the previous examples of the present disclosure or an image instance segmentation method according to the previous examples of the present disclosure.

The examples of the present disclosure also provide for a computer device comprising a processor, a memory, and a computer program stored on the memory that when executed by the processor implements a training method according to the previous examples of the present disclosure or an image instance segmentation method according to the previous examples of the present disclosure.

Embodiments of the present disclosure also provide for a computer-readable storage medium. The computer-readable storage medium may be stored with executable code that, when executed by a computer, causes the computer to implement a training method according to the previous examples of the present disclosure or to implement an image instance segmentation method according to the previous examples of the present disclosure.

For example, the computer-readable storage medium may include, but is not limited to, Random Access Memory (RAM), Read-Only Memory (ROM), Electrically-Erasable Programmable Read-Only Memory (EPROM), Static Random Access Memory (SRAM), hard disk, flash memory, and the like.

Specific examples of the present disclosure are described above. Other examples are within the scope of the appended claims. In some instances, the actions or steps recorded in the claims may be performed in a different order than in the examples and may still achieve the desired result. In addition, the process depicted in the drawings does not necessarily require a particular sequence or sequential sequence shown to achieve a desired result. In certain embodiments, multitasking and parallel processing may also be possible or may be advantageous.

Not all steps and units in the above-mentioned processes and system structure diagrams are necessary, and some steps or units may be omitted based on actual needs. The device structure described in the above examples may be a physical structure or a logical structure, i.e., some cells may be implemented by the same physical entity, some cells may be implemented by a plurality of physical entities, respectively, or may be implemented collectively by certain components of the plurality of independent devices.

The foregoing explanation of the embodiments describes the present disclosure only in the framework of the examples described. Of course, as long as the various features of the embodiment are technically significant and can be freely combined with one another, similar parts between the different examples can be referenced to one another without departing from the framework of the present disclosure.

The present disclosure is described in detail above with reference to the specific examples. Obviously, the above description and the examples shown in the appended drawings should be understood as exemplary and do not constitute a limitation to the present disclosure. For those skilled in the art, various variants or modifications may be made thereto without departing from the spirit of the present disclosure, none of which are outside the scope of the present disclosure.

**Claims**

1. A training method for an image mask generator, comprising:

   selecting a sample image (100, 200) from each of the two sets of sample images to input a generated adversarial network comprising a generator (303) and a discriminator (305), each sample image comprising a target object, a target object of the first set of sample images among the two sets of sample images being unblocked, and a target object of the second set of sample images being partially blocked;
   generating, with the generator (303), the masks for the two sample images (100, 200) respectively, the mask for each sample image (100, 200) used for predicting a target object of the sample image;
   inputting the generated masks of the two sample images (100, 200) into the discriminator (305), and constructing the adversarial loss functions (307) with the discrimination results of the generated masks of the two sample images (100, 200) by using the discriminator (305);
   updating the parameters of the generator (303) according to the adversarial loss functions (307) to train the generator (303).

2. The training method according to Claim 1, wherein the adversarial loss function (307) comprises an stack of a first loss item and a second loss item, wherein

   the first loss item is constructed based on a first discrimination result of the mask of the first sample image (100) generated by the generator (303) based on the discriminator (305), the first sample image (100) being taken from the first set of sample images;
   The second loss item is constructed based on a second discrimination result of the mask of the second sample image (200) generated by the generator (303) based on the discriminator (305), the second sample image (200) being taken from the second set of sample images.

3. The training method according to Claim 2, wherein the first discrimination result comprises: a probability that a mask of the first sample image (100) generated by the generator (303) is a mask of an image with an unblocked target object, according to the estimation of the discriminator (305);
   The second discrimination result comprises: The discriminator (305) estimates a probability that a mask of the second sample image (200) generated by the generator (303) is a mask of an image with an at least partially blocked target object, according to the estimation of the discriminator (305).

4. The training method according to Claim 1, wherein the masks of the two sample images (100, 200) are generated separately with the generator (303), comprising:
   generating, with the generator (303), a pixel-level mask probability of a target object for the two sample images (100, 200), respectively.

5. The training method according to any one of Claims 1-4, further comprising: Detecting the target objects of the two sample images (100, 200), obtaining the annotated images (110, 210) of the two sample images (100, 200) respectively, the annotated image (110, 210) of each sample image (100, 200) comprising the annotated result of a bounding box (111,211) of a target object (101, 201) for the sample image (100, 200);

   inputting the two sample images (100, 200) into the generative adversarial network, comprising: inputting the annotated images (110, 210) of the two sample images (100, 200) into the generative adversarial network; generating, with the generator (303), the masks for the two sample images (100, 200), respectively, comprising: generating, with the generator (303), the shield of a target object (101, 201) having the annotated results for the two sample images (100, 200), respectively.

6. The training method according to Claim 4, wherein the training method comprises a plurality of iterative training processes to reduce the mask probability distribution differences of the target objects for two sample images (100, 200) generated by the generator (303), and/or enhancing the capability of the discriminator (305) to differentiate the mask types of the two sample images (100, 200) generated by the generator (303) for training purposes, repeating the steps of training the generator (303).

7. The training method according to Claim 6, wherein the mask of the two sample images (100, 200) generated by the generator (303), respectively, comprises: generating, with the generator (303), a mask of the plurality of target objects for at least one of the two sample images (100, 200), the masks of the two sample images (100, 200) generated during each training process being input into the discriminator (305), comprising: filtering the masks of the plurality of target objects generated for at least one sample image to obtain the mask of one target object in each sample image, and inputting the mask of one target object in each sample image into the discriminator (305).

8. The training method according to Claim 6, further comprising: determining whether the training termination condition is satisfied; if yes, terminating the training; if no, repeating the steps of training the generator (303); the training termination condition comprises:

   terminating the iterative training processes when a loss function value determined according to the adversarial loss function (307) is within a first predetermined threshold range; and/or, obtaining a pixel count distribution map of a mask probability for a target object in the two sample images (100, 200), calculating the standard deviation of a pixel count distribution of the mask probability based on the pixel count distribution map of the mask probability, and terminating the iterative training processes when a difference in the standard deviation of the pixel count distribution of the mask probability for the target object in the two sample images is within a second predetermined threshold range.

9. The training method according to Claim 6, wherein each set of sample images in the two sets of sample images comprises a plurality of sample images, each sample image comprising at least one target object region, each target object region comprising at least one target object, the plurality of iterative training processes comprising:

   selecting one sample image from each of the two sets of sample images (100, 200) per iterative training process as a training sample to be inputted into the generative adversarial network, traversing a plurality of sample images in each set of sample images through the plurality of iterative training processes; and/or, Each sample image comprises a plurality of target object regions, inputting different target object regions of the same sample image (100, 200) as training samples into the generative adversarial network during different iterative training processes, and traversing different target object regions of the same sample image (100, 200) through different iterative training processes, respectively.

10. The training method according to Claim 1, wherein the second set of sample images involves virtual images that form the partially blocked target objects by constructing a relative location relationship of the blocked and unblocked initial target objects.

11. The training method according to Claim 10, wherein there are a plurality of the partially blocked target objects in the virtual image, the training method further comprising: obtaining a mask truth value of an unblocked initial target object corresponding to a partially blocked target object from the plurality of partially blocked target objects; generating, with the generator (303), the masks for the two sample images (100, 200), respectively, comprising: generating, with the generator (303), the masks of the plurality of partially blocked target objects in the virtual image; and, using the acquired mask truth value of the corresponding unblocked initial target object to filter the generated masks of the plurality of partially blocked target objects for acquiring the mask of a partially blocked target object generated by the generator (303).

12. The training method according to Claim 10, wherein object detection of the two sample images (100, 200) comprises:

   generating a bounding box of a corresponding partially blocked target object in the virtual image according to a bounding box of the unblocked initial target object to acquire an annotated image of one set of virtual images; or, generating a two-value mask of a partially blocked target object in the virtual image, and generating a bounding box of a partially blocked target object in the virtual image according to the generated two-value mask.

13. The training method according to Claim 5, wherein the two sample images comprise a real image from the second set of sample images, implementing the object detection of the two sample images to obtain the annotated image of the two sample images respectively, comprising:
Implementing the object detection of the one real image by automatic annotation and/or manual annotation to obtain the annotated image of the one real image.

14. The training method according to Claim 5, wherein the annotated image (110, 210) of each sample image (100, 200) further comprises an annotated result for a category of a target object in the sample image (100, 200), the training method further comprising: generating a category of a target object in the two sample images (100, 200) with the generator (303).

15. An image instance segmentation method, comprising:

Implementing object detection of a received image to identify a bounding box of a target object in the received image;
generating, with an image mask generator, a mask for identifying the target object based on the bounding box, wherein the image mask generator is acquired using the training method according to any one of Claims 1-14.

16. The image instance segmentation method according to Claim 15, further comprising:
Implementing object detection of the received image to identify the category of a target object in the received image;
outputting the mask and category of the target object with the image mask generator.

17. A computer program product comprising a computer program that, when executed by a processor, implements a training method of an image mask generator according to any one of Claims 1-14 or an image instance segmentation method according to Claim 15 or Claim 16.

18. A computer device comprising a processor, a memory, and a computer program stored on the memory, wherein the computer program is executed by the processor to implement a training method of an image mask generator according to any one of Claims 1-14 or to implement an image instance segmentation method according to Claim 15 or Claim 16.

Fig. 1

Fig. 2

Fig. 3

100

Fig. 4

## 200

201

Fig. 5

## 110

101

111

Fig. 6

210

211
201

Fig. 7

111

113

Fig. 8

211

213

Fig. 9

51

53

Fig. 10

Europäisches
Patentamt

European
Patent Office

Office européen
des brevets

# EUROPEAN SEARCH REPORT

Application Number

EP 23 18 6126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN XIAOSHENG ET AL: "Visualizing the Invisible: Occluded Vehicle Segmentation and Recovery", 2019 IEEE/CVF INTERNATIONAL CONFERENCE ON COMPUTER VISION (ICCV), IEEE, 27 October 2019 (2019-10-27), pages 7617-7626, XP033723078, DOI: 10.1109/ICCV.2019.00771 [retrieved on 2020-02-24] * abstract, section 1-4.5, Figs. 1-9, Tables 1-5 * | 1-18 | INV. G06T7/11 G06N3/045 G06N3/08 G06T7/70 G06V10/774 |
| A | SALEH KAZIWA ET AL: "Occlusion Handling in Generic Object Detection: A Review", 2021 IEEE 19TH WORLD SYMPOSIUM ON APPLIED MACHINE INTELLIGENCE AND INFORMATICS (SAMI), IEEE, 21 January 2021 (2021-01-21), pages 477-484, XP033888741, DOI: 10.1109/SAMI50585.2021.9378657 [retrieved on 2021-03-12] * abstract, Figs. 1-3, sections I-VII * | 1-18 | |

TECHNICAL FIELDS SEARCHED (IPC)

G06T

The present search report has been drawn up for all claims

| Place of search | Date of completion of the search | Examiner |
|---|---|---|
| Munich | 5 December 2023 | Borotschnig, Hermann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)